# EUROPÄISCHE PATENTANMELDUNG

(11) **EP 1 516 856 A1**
(43) Veröffentlichungstag der Anmeldung: **23.03.2005**
(21) Anmeldenummer: 03020934.0
(22) Anmeldetag: 16.09.2003
(51) Int. Cl.: C02F 3/12, C02F 3/00, B01D 61/22, B01D 65/02

(54) **Membrantrennvorrichtung für Kläranlagen**

(71) Anmelder: Baumann, Markus, 32602 Vlotho (DE)
(72) Erfinder: Höwener, Jens, 32457 Porta Westfalica (DE)
(74) Vertreter: TER MEER STEINMEISTER & PARTNER GbR

(57) **Zusammenfassung**

Die Erfindung betrifft eine Membrantrennvorrichtung für Kläranlagen mit einem Membranmodul (12), das untergetaucht in einem der Behälter (10) einer Kläranlage angeordnet ist, einer mit einer Pumpe (16) ausgerüsteten Leitung, die den Ausgang des Membranmoduls (12) mit einem Auslauf (20) verbindet, und einer Steuer- und Regeleinheit (30) für die Pumpe (16). Stromabwärts der Pumpe (16) ist in einer erhöhten Position ein Flüssigkeitsspeicher (18) mit freiem Auslauf (20) angeordnet, vor oder hinter der Pumpe (16) ist in der Leitung (14) ein Rückschlagventil (22) vorgesehen und der Leitungsabschnitt, der die Pumpe (16) und das Rückschlagventil (22) enthält, wird durch eine Bypassleitung (26) überbrückt, in der sich ein Absperrventil (28) befindet.

## Beschreibung

Die Erfindung betrifft eine Membrantrennvorrichtung für Kläranlagen, mit einem Membranmodul, das untergetaucht in einem der Behälter einer Kläranlage angeordnet ist, einer mit einer Pumpe ausgerüsteten Leitung, die den Ausgang des Membranmoduls mit einem Auslauf verbindet und einer Steuer- und Regeleinheit für die Pumpe.

In Kläranlagen nach dem sogenannten MBR-System wird die flüssige Phase, d.h. das Permeat, vielfach durch ein Membranmodul hindurch abgezogen und in den Auslauf übergeben. Auf diese Weise können feinste Festkörperstrukturen bis hin zur Größe von Bakterien und Viren zurückgehalten werden, derart, dass das Wasser danach unmittelbar als Brauchwasser verwendet werden kann, das der EU-Badegewässer-Richtlinie entspricht. Dabei kann ein "Behälter" im obigen Sinne sowohl ein eigentlicher Behälter einer Kläranlage sein, jedoch auch ein Sammelbehälter, der einer biologischen Kläranlage nachgeschaltet ist und in dem das Wasser mithilfe von Membranmodulen im vorgenannten Sinne weiter aufbereitet wird. Im Bereich von Kleinkläranlagen werden derzeit Systeme eingesetzt, die ohne besondere Steuermechanismen die flüssige Phase, das Permeat, von den Feststoffen im Belebtschlamm abtrennen. Dies geschieht durch Anlegen eines statischen, bei anderen Verfahren durch Anlegen eines dynamischen Unterdrucks an ein Membranmodül.

Im Falle des statischen Unterdrucks wird das Membranmodul in einer Position oberhalb des Auslaufs des Systems angeordnet, so dass eine Druckdifferenz zum Auslauf hin erzeugt wird, die das Abwasser durch das Membranmodul hindurchdrückt. Um Druckdifferenzen im verwertbaren Bereich zu erzielen, müssen die relativ groß dimensionierten Membranmodule in der Regel am Boden des Belebungsbeckens installiert werden, damit eine ausreichende statische Druckhöhe zur Verfügung steht. Hier befindet sich jedoch während der Belüftungspausen die abgesetzte Biomasse, der sogenannte Belebtschlamm, in einer sehr hohen Feststoffkonzentration. Es besteht daher die Gefahr, dass sich die Membranmodule bei Ausfall oder Beeinträchtigung des Belüftungssystems im Belebungsbecken zusetzen.

Bei der dynamischen Variante wird der Unterdruck zum Abzug des Permeats mit Hilfe einer Pumpe aufgebracht. Diese Pumpe ist bei kleinen, kostengünstigen Anlagen in der Regel die selbstansaugende Pumpe eines ungeregelten Hauswasserwerks.

Diese Pumpe ist jedoch in ihrer Leistungscharakteristik häufig überdimensioniert, so dass je nach Größe des Membranmoduls eine Drosselung durch ein Absperrventil notwendig ist, damit das Membranmodul nicht zerstört oder beschädigt wird. Außerdem besitzen Pumpen dieser Dimension ein hohes Laufgeräusch.

Es kommt hinzu, dass beide Verfahren zusätzliche Pumpentechnik für eine Rückspülung des Membranmodul notwendig machen.

Der Erfindung liegt die Aufgabe zugrunde, eine Vorrichtung der obigen Art zu schaffen, die bei geringem Energiebedarf und schonender Behandlung des Membranmoduls sowohl beim Abzug des Permeats als auch bei der Rückspülung eine konstante Druckdifferenz und damit gute Funktionsweise der Vorrichtung gewährleistet.

Zur Lösung dieser Aufgabe ist die erfindungsgemäße Membrantrennvorrichtung dadurch gekennzeichnet.
dass stromabwärts der Pumpe in einer erhöhten Position ein Flüssigkeitsspeicher mit freiem Auslauf angeordnet ist,
dass vor oder hinter der Pumpe in der Leitung ein Rückschlagventil vorgesehen ist und
dass der Leitungsabschnitt, der die Pumpe und das Rückschlagventil enthält, durch eine Bypassleitung überbrückt wird, in der sich ein Absperrventil befindet.

Vorzugsweise ist die Pumpe eine Gleichstrompumpe, die sich durch niedrigen Energieverbrauch und leisen Lauf auszeichnet.

Am Ausgang des Membranmoduls befindet sich vorzugsweise ein Drucksensor, der mit der Steuer- und Regeleinheit verbunden ist, so dass die Steuer- und Regeleinheit in die Lage versetzt wird, den Gleichstrommotor der Pumpe so zu steuern, dass ein konstanter Unterdruck gehalten wird. Während dies für den Abzug des Permeats gilt, erfolgt die Rückspülung mit Hilfe des Permeats, das in dem Flüssigkeitsspeicher und in dem Abschnitt der Leitung stromabwärts des Rückschlagventils zurückgehalten wird. Dieses Permeat, das sich in dem erhöht angeordneten Flüssigkeitsspeicher befindet, besitzt gegenüber dem Membranmodul ein statisches Druckgefälle, das die gewünschte Rückspülung ermöglicht. Auch in diesem Falle ist sicherzustellen, dass die Druckdifferenz auf einem möglichst konstanten, nicht zu hohen Wert gehalten wird. Zu diesem Zweck wird mit Hilfe des Drucksensors der an dem Membranmodul von dessen Ausgang her anstehende Druck überwacht und das Absperrventil so gesteuert, dass der Rückstrom des Permeats aus dem Flüssigkeitsspeicher nicht zu einer übermäßigen Druckbelastung des Membranmoduls führt.

Vorzugsweise ist das Membranmodul im oberen Bereich des oder der Klärbehälter angeordnet. Dieser obere Bereich wird auch als Klarwasserzone bezeichnet. Die Belastung des Membranmoduls durch Feststoffe ist hier erheblich geringer als im unteren Bereich des oder der Klärbehälter.

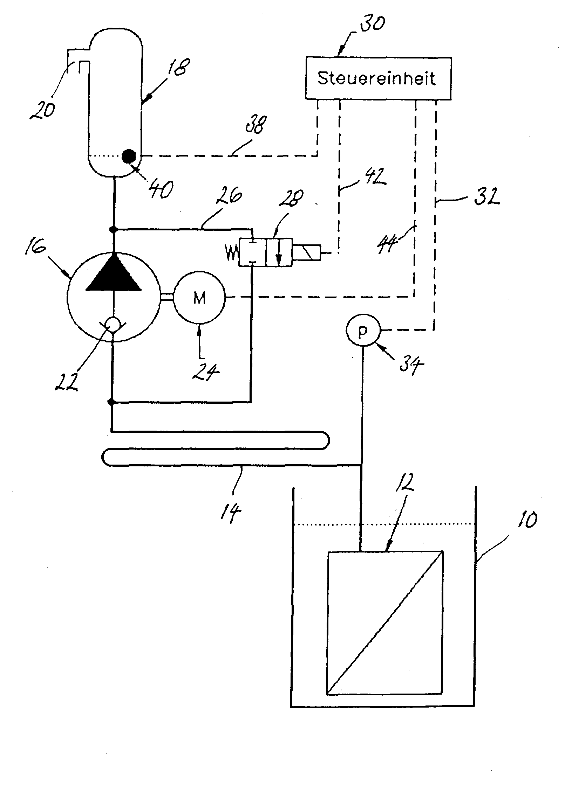

Im folgenden werden bevorzugte Ausführungsbeispiele der Erfindung anhand der beigefügten Zeichnung näher erläutert.

Die einzige Figur ist ein schematisches Schaltbild einer erfindungsgemäßen Vorrichtung.

In einem Behälter 10 einer Kleinkläranlage befindet sich in eingetauchter Stellung ein Membranmodul 12. Der Behälter 10 kann beispielsweise die Belebungskammer aufnehmen. Das Membranmodul 12 bildet einen Filter, durch den mit Hilfe einer Leitung 14 im wesentlichen klares Wasser, das sogenannte Permeat abzogen werden kann.

In der Leitung 14 befindet sich eine Pumpe 16, die das Permeat durch die Leitung 14 bis in einen in erhöhter Position stromabwärts der Pumpe angeordneten Flüssigkeitsspeicher 18, der einen Auslauf 20 aufweist, der beispielsweise zu einem Brauchwasserspeicher führt.

Vor oder hinter der Pumpe oder, wie in der Zeichnung dargestellt, integriert in die Pumpenkonstruktion ist ein Rückschlagventil 22 vorgesehen, das einen Rückstrom des Permeats in Richtung des Membranmoduls 12 verhindert.

Die Pumpe 16 wird durch einen Elektromotor 24 angetrieben, der vorzugsweise ein regelbarer Gleichstrommotor ist. Die Anordnung aus Pumpe 16 und Rückschlagventil 22, die sich in der Leitung 14 zwischen dem Membranmodul 12 und dem Flüssigkeitsspeicher 18 befindet, wird durch eine Bypassleitung umgangen, in der sich ein Absperrventil 28 in der Form eines 2/2-Wege-Ventils befindet. Wenn dieses Absperrventil 28 geöffnet wird, kann das in dem Flüssigkeitsspeicher 20 angesammelte Permeat durch die Leitung 14 und den Bypass 26 zurück zu dem Membranmodul 12 abgelassen werden und diesen rückspülen. Ein Füllstandsmesser 40 innerhalb des Flüssigkeitsspeichers 18 bewirkt eine Schließung des Absperrventils 28, wenn der Flüssigkeitsspiegel seine tiefste Stellung innerhalb des Flüssigkeitsspeichers erreicht hat.

Mit 30 ist eine Steuer- und Regeleinheit bezeichnet. Diese erhält zunächst über eine Steuerleitung 32 ein Signal eines Drucksensors 34, der über eine Zwischenleitung 36 kontinuierlich den Druck am Ausgang des Membranmoduls 12 überwacht. Eine weitere Steuerleitung 38 überträgt das Signal eines Füllstandsmessers 40 an die Steuer- und Regeleinheit 30, der sich in dem Flüssigkeitsspeicher 18 befindet. Im übrigen sind Steuerleitungen 42 und 44 vorgesehen, die die Steuer- und Regeleinheit 30 mit dem Absperrventil 28 und dem Elektromotor 24 verbinden.

Eine erfindungsgemäße Vorrichtung arbeitet wie folgt:

In Phasen, in denen beim Betrieb der Kläranlage ein Klarwasserabzug vorgesehen ist, wird die Pumpe 16 eingeschaltet. Sie zieht über die Leitung 14 Klarwasser (Permeat) durch das als Filter wirkende Membranmodul 12 hindurch und transportiert dieses Permeat in den hochgelegenen Flüssigkeitsspeicher 18.

Wenn der Flüssigkeitsspeicher 18 gefüllt ist, tritt das Permeat durch den Auslauf 20 aus und gelangt beispielsweise in einen Vorfluter bzw. Sammelbehälter. Das Rückschlagventil 22 verhindert in dieser Phase, dass das Permeat durch die Leitung 14 zurückströmt zum Membranmodul. Dies gilt auch dann, wenn die Pumpe 16 abgeschaltet ist.

Der Drucksensor 34 überwacht ständig den am Ausgang des Membranmoduls herrschenden Druck. Während des Betriebes der Pumpe 16 bildet sich durch das Membranmodul hindurch ein Druckgefälle zu dessen Ausgang hin. Mit Hilfe des Drucksensors 34 und der Steuereinheit 30 in Verbindung mit dem Motor 24 der Pumpe wird erfindungsgemäß dafür gesorgt, dass das Druckgefälle durch das Membranmodul hindurch in Richtung Pumpe 16 gleichmäßig bleibt und einen vorgegebenen Wert nicht überschreitet.

Wenn die Entnahme des Permeats abgeschaltet werden soll, wird der Motor 24 der Pumpe 16 abgeschaltet. Wie erwähnt, sorgt das Rückschlagventil 22 dafür, dass das Permeat trotz der erhöhten Position des Flüssigkeitsspeichers 18 nicht nur die Leitung 14 zurückströmt. Dies geschieht vielmehr in gesteuerter Weise über die Bypassleitung 26 und das Absperrventil 28, das beispielsweise in einem Puls-Pause-Betrieb so mit Hilfe der Steuer- und Regeleinheit 30 gesteuert wird, dass eine vorgegebene Menge des Permeats aus dem Flüssigkeitsspeicher 18 durch die Leitung 14 in Verbindung mit der Bypassleitung 26 zurück zum Membranmodul 12 strömt. Auch in diesem Falle überwacht der Drucksensor 34 den am Ausgang, nunmehr Eingang des Membranmoduls 12 herrschenden Druck. In diesem Falle verläuft das Druckgefälle in umgekehrter Richtung, nämlich von der Leitung 14 aus durch das Membranmodul hindurch in den Behälter 10. Auch insoweit wird dafür gesorgt, dass das Druckgefälle am Membranmodul 12 einen bestimmten Wert nicht überschreitet, indem das Absperrventil 28 beispielsweise mit Hilfe der Steuer- und Regeleinheit 30 in einem Puls-Pause-Betrieb geöffnet und geschlossen wird, derart, dass sich an dem Drucksensor 34 ein konstanter Druck einstellt, der eine vorgegebene Druckhöhe nicht überschreitet.

Durch Begrenzung des am Membranmodul anstehenden Über- bzw. Unterdrucks kann erreicht werden, dass dieses schonend behandelt wird und eine lange Filterstandzeit aufweist.

## Patentansprüche

1. Membrantrennvorrichtung für Kläranlagen mit einem Membranmodul (12), das untergetaucht in einem der Behälter (10) einer Kläranlage angeordnet ist, einer mit einer Pumpe (16) ausgerüsteten Leitung, die den Ausgang des Membranmoduls (12) mit einem Auslauf (20) verbindet, und einer Steuer- und Regeleinheit (30) für die Pumpe (16), **dadurch gekennzeichnet,**
**dass** stromabwärts der Pumpe (16) in einer erhöhten Position ein Flüssigkeitsspeicher (18) mit freiem Auslauf (20) angeordnet ist,
**dass** vor oder hinter der Pumpe (16) in der Leitung (14) ein Rückschlagventil (22) vorgesehen ist und
**dass** der Leitungsabschnitt, der die Pumpe (16) und das Rückschlagventil (22) enthält, durch eine Bypassleitung (26) überbrückt wird, in der sich ein Absperrventil (28) befindet.

2. Membrantrennvorrichtung nach Anspruch 1, **dadurch gekennzeichnet, dass** sich am Ausgang des Membranmoduls ein Drucksensor (34) befindet.

3. Membrantrennvorrichtung nach Anspruch 1 oder 2, **dadurch gekennzeichnet, dass** die Pumpe (16) durch einen Elektromotor, insbesondere Gleichstrommotor (28) antreibbar ist.

4. Membrantrennvorrichtung nach einem der Ansprüche 1 bis 3, **dadurch gekennzeichnet, dass** der Behälter (10) die Belebtschlammkammer einer Mehrkammer-Kläranlage bildet.

5. Membrantrennvorrichtung nach einem der Ansprüche 1 bis 3, **dadurch gekennzeichnet, dass** der Behälter (10) ein Sammelbehälter für das bereits biologisch geklärte Wasser einer Kläranlage ist.

6. Membrantrennvorrichtung nach einem der Ansprüche 1 bis 3, **dadurch gekennzeichnet, dass** das Membranmodul (12) im oberen Bereich des Behälters angeordnet ist

7. Membrantrennvorrichtung nach einem der vorhergehenden Ansprüche, **dadurch gekennzeichnet, dass** die Steuer- und Regeleinrichtung über Steuerleitungen (32,38,42,44) mit dem Drucksensor (34), einem Füllstandsmesser (40) des Flüssigkeitsspeichers (18), dem Elektromotor (24) der Pumpe (16) und/oder dem Absperrventil (28) verbunden ist.
